# EUROPÄISCHE PATENTANMELDUNG

(11) **EP 3 434 720 A1**
(43) Veröffentlichungstag der Anmeldung: **30.01.2019**
(21) Anmeldenummer: 17183632.3
(22) Anmeldetag: 27.07.2017
(51) Int. Cl.: C08J 9/224, C08J 9/22, C08J 9/232, C08J 9/236

(54) **VERFAHREN ZUR HERSTELLUNG EINES SCHALL- UND/ODER WÄRMEDÄMMELEMENTS SOWIE SCHALL- UND/ODER WÄRMEDÄMMELEMENT**

(71) Anmelder: STO SE & Co. KGaA, 79780 Stühlingen (DE)
(72) Erfinder: Hitzler, Martin, 78244 Gottmadingen (DE); Weier, Andreas, 78647 Trossingen (DE); Burgeth, Gerald, 79787 Lauchringen (DE)
(74) Vertreter: Gottschalk, Matthias

(57) **Zusammenfassung**

Die Erfindung betrifft ein Verfahren zur Herstellung eines Schall- und/oder Wärmedämmelements, bei dem schäumbare und/oder vorgeschäumte Polymerschaumpartikel verwendet werden, die vor einem Endschäumprozess mit einem organischen Bindemittel beschichtet werden. Die Erfindung ist durch folgende Schritte gekennzeichnet:
a) Beschichten zumindest eines Teils der Polymerschaumpartikel mit einer wässrigen Polymerdispersion,
b) Trocknen der beschichteten Polymerschaumpartikel,
c) optional: Lagern der beschichteten und getrockneten Polymerschaumpartikel über einen Zeitraum von mindestens 12 Stunden zur Treibmittel-Abreicherung bzw. zur Beschleunigung der Treibmittel-Abreicherung,
d) Endschäumen der beschichteten, getrockneten und vorzugsweise abgereicherten Polymerschaumpartikel unter Zugabe von Feuchtigkeit und/oder Wärme, wobei das zum Beschichten der Polymerschaumpartikel eingesetzte Bindemittel reaktiviert wird, so dass ein die Polymerschaumpartikel zumindest teilweise umhüllender Bindemittelfilm ausgebildet wird, der die Expansion der Polymerschaumpartikel während des Endschäumprozesses verringert.

Ferner betrifft die Erfindung ein Schall- und/oder Wärmedämmelement, das nach einem solchen Verfahren hergestellt worden ist.

## Beschreibung

Die Erfindung betrifft ein Verfahren zur Herstellung eines Schall- und/oder Wärmedämmelements mit den Merkmalen des Oberbegriffs des Anspruchs 1. Ferner betrifft die Erfindung ein nach diesem Verfahren hergestelltes Schall- und/oder Wärmedämmelement.

### Stand der Technik

Dämmelemente zur Schall- und/oder Wärmedämmung von Gebäuden können aus den unterschiedlichsten Dämmstoffen hergestellt sein. Besonders häufig jedoch, insbesondere im Fassadenbereich, finden Dämmelemente aus Polystyrol-Partikelschaum Einsatz. Denn diese weisen nicht nur gute Dämmwerte auf, sondern sind zudem vergleichsweise kostengünstig herzustellen. Die guten Dämmwerte sind vorrangig auf die luftgefüllten Poren bzw. Zellen zurückzuführen, die beim Schäumen der Polystyrol-Partikel ausgebildet werden. Analog eignen sich auch andere Polymere zur Ausbildung von Dämmstoffen, sofern deren Partikel schäumbar sind. Je größer das luftgefüllte Gesamtporenvolumen bzw. Gesamtzellvolumen ist, desto besser sind in der Regel die Dämmeigenschaften, insbesondere die Wärmedämmeigenschaften, des jeweiligen Dämmstoffs.

Das Gesamtporenvolumen bzw. Gesamtzellvolumen umfasst auch ein zwischen den Partikeln verbleibendes Zwickelvolumen, das je nach Verschweißungs- und/oder Verdichtungsgrad der Ausgangsstoffe unterschiedlich groß ausfallen kann.

Aus der EP 2 527 124 A1 geht beispielhaft ein Verfahren zur Herstellung eines eine Hohlraumstruktur aufweisenden Formkörpers zur Schall- und/oder Wärmedämmung hervor, bei dem vorgeschäumte Polystyrol-Partikel unter Einwirkung von Druck und/oder Wärme verdichtet werden. Der Verdichtungsgrad ist dabei derart gewählt, dass ein zusammenhängendes Hohlraumvolumen im Formkörper erhalten bleibt. Aufgrund des zusammenhängenden Hohlraumvolumens ist der Formkörper in der Lage, Wasserdampf und Wasser aufzunehmen und sofort wieder abzugeben. Der nach diesem Verfahren hergestellte Formkörper ist demnach insbesondere als Dämm- und Drainageplatte einsetzbar. Zur Erhöhung der mechanischen Stabilität des Formköpers wird in dieser Druckschrift des Weiteren vorgeschlagen, die vorgeschäumten Polystyrol-Partikel vor dem Verdichten mit einem Bindemittel zu beschichten, wobei das Verdichten erfolgt, bevor das Bindemittel vollständig ausgehärtet ist. Über das Bindemittel wird somit eine Verklebung der Polystyrol-Partikel erzielt.

Aus der EP 2 873 695 A1 ist ferner ein Verfahren zur Herstellung einer Dämm- und Drainageplatte bekannt, bei dem schäumbare und/oder vorgeschäumte Polystyrol-Partikel verwendet werden, die mit einem organischen Bindemittel beschichtet, in eine Form eingegeben und einem Endschäumprozess unterzogen werden. Zum Beschichten wird ein pulverförmiges organisches Bindemittel verwendet, das durch Zugabe von Feuchtigkeit und/oder Wärme aktiviert wird, so dass ein die Polystyrol-Partikel zumindest teilweise umhüllender Bindemittelfilm ausgebildet wird, der die Expansion der Polystyrol-Partikel während des Endschäumprozesses verringert. Durch die verringerte Expansion der Polystyrol-Partikel bleibt ein Zwickelvolumen zwischen den Partikeln erhalten, das ein zusammenhängendes Hohlraumvolumen ausbildet, so dass die nach diesem Verfahren hergestellte Platte wasserdurchlässig ist. Zugleich wird ein stabiler Verbund der Polystyrol-Partikel über die zusätzliche Verklebung im Bereich des die Polystyrol-Partikel umhüllenden Bindemittelfilms erreicht.

Ausgehend von dem vorstehend genannten Stand der Technik liegt der vorliegenden Erfindung die Aufgabe zugrunde, die Herstellung eines Schall- und/oder Wärmedämmelements mit einem definierten Zwickel- bzw. Hohlraumvolumen einfacher und effizienter zu gestalten.

Zur Lösung der Aufgabe wird das Verfahren mit den Merkmalen des Anspruchs 1 vorgeschlagen. Vorteilhafte Weiterbildungen der Erfindung sind den Unteransprüchen zu entnehmen. Ferner wird ein Schall- und/oder Wärmedämmelement angegeben, das nach einem erfindungsgemäßen Verfahren hergestellt worden ist.

### Offenbarung der Erfindung

Bei dem zur Herstellung eines Schall- und/oder Wärmedämmelements vorgeschlagenen Verfahren werden schäumbare und/oder vorgeschäumte Polymerschaumpartikel verwendet, die vor einem Endschäumprozess mit einem organischen Bindemittel beschichtet werden. Erfindungsgemäß umfasst das Verfahren folgende Schritte:
a) Beschichten zumindest eines Teils der Polymerschaumpartikel mit einer wässrigen Polymerdispersion,
b) Trocknen der beschichteten Polymerschaumpartikel,
c) optional: Lagern der beschichteten und getrockneten Polymerschaumpartikel über einen Zeitraum von mindestens 12 Stunden zur Treibmittel-Abreicherung bzw. zur Beschleunigung der Treibmittel-Abreicherung
d) Endschäumen der beschichteten, getrockneten und vorzugsweise abgereicherten Polymerschaumpartikel unter Zugabe von Feuchtigkeit und/oder Wärme, wobei das zum Beschichten der Polymerschaumpartikel eingesetzte Bindemittel reaktiviert wird, so dass ein die Polymerschaumpartikel zumindest teilweise umhüllender Bindemittelfilm ausgebildet wird, der die Expansion der Polymerschaumpartikel während des Endschäumprozesses verringert.

Durch die verringerte Expansion der Polymerschaumpartikel beim Endschäumen bleibt ein Zwickelvolumen zwischen den endgeschäumten Polymerschaumpartikeln erhalten, das - wie bei der aus dem Stand der Technik bekannten Dämm- und Drainageplatte - ein zusammenhängendes Hohlraumvolumen ausbildet. Ferner wird über das reaktivierte Bindemittel eine Verklebung der Polymerschaumpartikel erreicht, die in Kombination mit einer zumindest teilweisen Verschweißung der Polymerschaumpartikel dazu führt, dass das nach dem Verfahren hergestellte Schall- und/oder Wärmedämmelement eine hohe mechanische Stabilität besitzt.

Im Unterschied zum Stand der Technik wird jedoch kein pulverförmiges organisches Bindemittel zum Beschichten der Polymerschaumpartikel eingesetzt, sondern eine wässrige Polymerdispersion. Auf diese Weise wird eine bessere Verteilung des Bindemittels beim Beschichten erzielt. Ferner wird die Haftung des Bindemittels auf den Polymerschaumpartikeln verbessert. Dies wiederum hat zur Folge, dass der Bindemittelanteil gesenkt werden kann.

Eine Absenkung des Bindemittelanteils kann insbesondere aus dem Grund erwünscht sein, die Wasseraufnahmefähigkeit des nach dem Verfahren hergestellten Schall- und/oder Wärmedämmelements herabzusetzen, um sicherzustellen, dass Wasser hindurch geleitet und nicht als Feuchtigkeit gespeichert wird. Denn in dem Schall- und/oder Wärmedämmelement gespeicherte Feuchtigkeit würde die Dämmeigenschaften beeinträchtigen. Ferner wird durch einen hohen Bindemittelanteil die Brennbarkeit des Schall- und/oder Wärmedämmelements erhöht, was ebenfalls nicht erwünscht ist. Darüber hinaus erhöht sich mit steigendem Bindemittelanteil die Wärmeleifähigkeit.

Im Unterschied zum Stand der Technik wird bei dem erfindungsgemäßen Verfahren der Endschäumprozess zudem nicht unmittelbar nach dem Verfahrensschritt des Beschichtens durchgeführt, sondern vorzugsweise erst nach den Verfahrensschritten Trocknen und Lagern der beschichteten Polymerschaumpartikel.

Das Trocknen der beschichteten Polymerschaumpartikel besitzt den Vorteil, dass der Energieeinsatz beim Endschäumen geringer ist. Denn das Trocknen minimiert die Wasserlast, welche die beschichteten Polymerschaumpartikel mit einbringen. Durch das Lagern der beschichteten und getrockneten Polymerschaumpartikel sinkt der Treibmittelgehalt, so dass durch diese Maßnahme die Expansion der beschichteten Polymerschaumpartikel beim Endschäumen weiter herabgesetzt wird. Je länger die beschichteten und getrockneten Polymerschaumpartikel gelagert werden, desto weniger Treibmittel ist enthalten. Über den Lagerzeitraum kann demnach das spätere Hohlraumvolumen des nach dem Verfahren hergestellten Schall- und/oder Wärmedämmelements eingestellt werden. Vorzugsweise werden die beschichteten und getrockneten Polymerschaumpartikel über einen Zeitraum von 0,5 bis 5 Tagen gelagert.

Das vorzugsweise mehrtägige Lagern der beschichteten und getrockneten Polymerschaumpartikel stellt zudem eine vergleichsweise kostengünstige und energieeffiziente Maßnahme zur Verringerung der Expansion der Polymerschaumpartikel beim Endschäumen dar. Denn mit zunehmender Treibmittel-Abreicherung kann der Bindemittelanteil weiter gesenkt werden, was zu den vorstehend bereits genannten Vorteilen im Hinblick auf Wasseraufnahmefähigkeit und Brennbarkeit des nach dem Verfahren hergestellten Schall- und/oder Wärmedämmelements führt. Das Korsett, das der die Polymerschaumpartikel umhüllende Bindemittelfilm beim Endschäumen bildet, ist zwar dünner oder lückenhafter und damit weniger wirkungsvoll, ein Ausgleich wird jedoch durch den geringeren Treibmittelgehalt geschaffen. Das heißt, dass das Verfahren weiterhin die Herstellung von Schall- und/oder Wärmedämmelementen ermöglicht, die ein zusammenhängendes Hohlraumvolumen aufweisen. Insbesondere können Schall- und/oder Wärmedämmelemente hergestellt werden, die nicht nur wasserdampfdiffusionsoffen, sondern auch wasserdurchlässig sind.

Durch den Verfahrensschritt Trocknen, der dem Endschäumprozess vorausgeht, wird der wässrigen Polymerdispersion Feuchtigkeit entzogen. Diese härtet somit aus, bindet ab und/oder verfilmt, so dass sie ihre Klebewirkung verliert. Um dennoch beim Endschäumen einen die Polymerschaumpartikel zumindest teilweise umhüllenden Bindemittelfilm zu erzielen, der die Expansion der Polymerschaumpartikel einschränkt und später eine zusätzliche Verklebung der Polymerschaumpartikel bewirkt, muss das Bindemittel beim Endschäumen reaktiviert werden. Die Reaktivierung wird beim Endschäumen durch die Zugabe von Feuchtigkeit und/oder Wärme erreicht, so dass das Bindemittel erweicht und die gewünschte Verklebung der Polymerschaumpartikel bewirkt.

Die Reaktivierung des zum Beschichten der Polymerschaumpartikel verwendeten Bindemittels setzt voraus, dass dieses reaktivierbar ist. Gemäß einer bevorzugten Ausführungsform der Erfindung wird daher zum Beschichten der schäumbaren und/oder vorgeschäumten Polymerschaumpartikel eine wässrige Polymerdispersion auf Basis eines Polymerbindemittels verwendet, das thermoplastisch ist und/oder eine Glasübergangstemperatur T_{g} zwischen -50°C und 30°C, vorzugsweise zwischen -40°C und 20°C, weiterhin vorzugsweise zwischen -35°C und 10°C aufweist. Die in Schritt d) des erfindungsgemäßen Verfahrens erforderliche Reaktivierung des Bindemittels kann auf diese Weise durch Zugabe von Wärme bewirkt werden. Im Gegensatz dazu sind duroplastische und/oder Reaktivbindemittel ungeeignet, da sie nicht reaktivierbar sind.

Alternativ oder ergänzend wird vorgeschlagen, dass zum Beschichten der schäumbaren und/oder vorgeschäumten Polymerschaumpartikel eine wässrige Polymerdispersion auf Basis eines Polymerbindemittels verwendet wird, das wasserlösliche oder anlösbare Stabilisatoren, insbesondere Polyvinylalkohole und/oder Metall-Fettsäuresalze, wie beispielsweise Natrium-Stearat, enthält. Metall-Fettsäuresalze weisen gegenüber den Polyvinylalkoholen den Vorteil auf, dass sie zugleich als Hydrophobierungsmittel fungieren, so dass diese als wasserlösliche oder anlösbare Stabilisatoren bevorzugt werden. Sofern die wässrige Polymerdispersion bzw. das enthaltene Polymerbindemittel nicht bereits wasserlösliche oder anlösbare Stabilisatoren enthält, können diese der wässrigen Polymerdispersion vor dem Beschichten in Schritt a) zugegeben werden. In diesem Fall wirkt es sich wiederum als Vorteil aus, dass eine wässrige Polymerdispersion und kein pulverförmiges Polymerbindemittel zum Beschichten verwendet wird, da hierüber eine gleichmäßige Verteilung und eine ausreichende Haftung der zugegebenen Stoffe an den Polymerschaumpartikeln sichergestellt ist.

Im Hinblick auf die gewünschte geringe Wasseraufnahmefähigkeit des nach dem Verfahren hergestellten Schall- und/oder Wärmedämmelements wird des Weiteren vorgeschlagen, dass zum Beschichten der schäumbaren und/oder vorgeschäumten Polymerschaumpartikel eine wässrige Polymerdispersion auf Basis eines Polymerbindemittels verwendet wird, das nicht-hydrophil ist. Als "nicht hydrophil" wird vorliegend ein Polymerbindemittel bezeichnet, das folgende Eigenschaften aufweist:
- einen statischen Anfangskontaktwinkel von Wasser nach 1 min Äquilibrieren ≥ 35°,
- eine Oberflächenenergie nach DIN 55660-2 ≤ 70 mN/m,
- einen polaren Anteil der Oberflächenenergie nach DIN 55660-2 ≤ 35 mN/m sowie
- einen dispersen Anteil der Oberflächenenergie nach DIN 55660-2 ≥ 10 mN/m.

Die Verwendung einer wässrigen Polymerdispersion auf Basis eines nicht-hydrophilen Polymerbindemittels führt in Schritt d) des erfindungsgemäßen Verfahrens zur Ausbildung eines die Polymerschaumpartikel umhüllenden Bindemittelfilms, der nicht nur die Expansion der Polymerschaumpartikel beim Endschäumen verringert und eine zusätzliche Verklebung der Polymerschaumpartikel bewirkt, sondern darüber hinaus die Hydrophilie des nach dem Verfahren hergestellten Schall- und/oder Wärmedämmelements in der Weise herabsetzt, dass das Schall- und/oder Wärmedämmelement aktiv kein Wasser aufnimmt. Denn je geringer die Hydrophilie ist, desto schlechter ist das Benetzungsverhalten. Das heißt, dass Wassertropfen weniger zum Spreiten neigen und idealerweise kugelförmig abperlen. Ferner wird auf diese Weise einer aktiven Wasseraufnahme durch Kapillareffekte entgegengewirkt. Ein nach dem erfindungsgemäßen Verfahren hergestelltes Schall- und/oder Wärmedämmelement ist somit insbesondere für den Einsatz im Außenbereich und/oder in besonders feuchtigkeitsbelasteten Bereichen geeignet. Ferner eignet es sich zur Verwendung als Drainageelement bzw. -platte.

Die Hydrophilie eines Polymerbindemittels wird maßgeblich durch folgende Faktoren bestimmt:
- die Polarität der Monomere
- die Anordnung der Monomerer untereinander sowie
- die Länge und den Vernetzungsgrad der Polymerketten.

Sofern dem Bindemittel zur Ausbildung der Beschichtung Additive zugegeben werden, beispielsweise, um die Verarbeitungsfähigkeit des Bindemittels zu verbessern, spielen ferner die Art und die Menge der Additive eine Rolle.

Da Hersteller von Bindemitteln hinsichtlich der vorstehend genannten Faktoren in der Regel keine Angaben machen, muss die Hydrophilie des Bindemittels versuchsweise ermittelt und/oder anhand anderer Faktoren bzw. Parametern bestimmt werden.

Beispielsweise kann versuchsweise der Kontaktwinkel (KW) von Wasser und von Diiodmethan auf der Bindemitteloberfläche bestimmt werden. Aus den Kontaktwinkeln wird dann die Oberflächenenergie (OFE) berechnet, die sich additiv aus einem polaren Anteil (PA) und einem (unpolaren) dispersen Anteil (DA) zusammensetzt. Der polare Anteil (PA) ist ein Maß für die Wechselwirkung zwischen der Oberfläche und einem polaren Stoff, wie beispielsweise Wasser. Der disperse Anteil (DA) ist ein Maß für die Wechselwirkung zwischen der Oberfläche und einem unpolaren Stoff, wie beispielsweise Öl.

Sämtliche vorstehend genannten Parameter können versuchsweise ermittelt werden, so dass vorab festgestellt werden kann, ob ein Bindemittel "nicht-hydrophil" im Sinne der vorliegenden Anmeldung ist.

Bevorzugt wird zur versuchsweisen Ermittlung bzw. Bestimmung der relevanten Parameter das reine Bindemittel in einer Nassschichtstärke von 250 µm auf eine Lenetta-Folie aufgerakelt. Nach drei Tagen Trocknung bei 23°C und 50% relativer Luftfeuchte wird der Kontaktwinkel eines Wassertropfens nach einer Minute Aquilibrierungszeit auf der Oberfläche der Bindemittelschicht beispielsweise mit einem Krüss Mobile Drop GH11 (Advance Software Version 1.2.1) gemessen. In gleicher Weise wird der Kontaktwinkel von Diiodmethan auf der Oberfläche der Bindemittelschicht bestimmt. Anschließend werden die Oberflächenenergie gemäß DIN 55660-2 (Dezember 2011), Verfahren nach Owens, Wendt, Rabel und Kaeble (OWRK) sowie der polare Anteil und der disperse Anteil ermittelt. Sofern das Bindemittel ein Dispersionspulver ist, wird dieses vorab mit Wasser redispergiert, so dass der Polymer-Feststoffanteil 50 Gew.-% beträgt.

Um die Wasseraufnahmefähigkeit eines nach dem Verfahren hergestellten Schall- und/oder Wärmedämmelements weiter zu verringern, wird vorgeschlagen, dass zum Beschichten der schäumbaren und/oder vorgeschäumten Polymerschaumpartikel eine wässrige Polymerdispersion auf Basis eines Polymerbindemittels verwendet wird, das folgende Eigenschaften - jeweils allein oder in Kombination - aufweist:
- einen statischen Anfangskontaktwinkel von Wasser nach 1 min Äquilibrieren ≥ 40°, vorzugsweise ≥ 50°, und/oder
- eine Oberflächenenergie nach DIN 55660-2 ≤ 65°mN/m, vorzugsweise ≤ 60 mN/m, und/oder
- einen polaren Anteil der Oberflächenenergie nach DIN 5660-2 ≤ 30 mN/m, vorzugsweise ≤ 25 mN/m, und/oder
- einen dispersen Anteil der Oberflächenenergie nach DIN 55660-2 ≥ 20 mN/m, vorzugsweise ≥ 30 mN/m.

Vorteilhafterweise wird zum Beschichten der schäumbaren und/oder vorgeschäumten Polymerschaumpartikel eine wässrige Polymerdispersion auf Basis von Acrylat, (Meth)acrylat, Styrolacrylat, Vinylacetat, Vinylacetat-Ethylen, Vinylestern, Vinylchlorid, Polyurethan, Polysiloxane und/oder Silikonharze verwendet. Dank einer hohen Bindekraft eines solchen Bindemittels kann einerseits die Haftung des Bindemittels an den Polymerschaumpartikeln, andererseits der Verbund der Polymerschaumpartikel untereinander aufgrund der mittels des Bindemittels bewirkten Verklebung verbessert werden.

In Weiterbildung des erfindungsgemäßen Verfahren wird vorgeschlagen, dass eine wässrige Polymerdispersion zum Beschichten der schäumbaren und/oder vorgeschäumten Polymerschaumpartikel verwendet wird, die mindestens ein Additiv enthält, wobei das Additiv vorzugsweise ein Flammschutzmittel ist. Durch Zugabe eines Flammschutzmittels kann die Brennbarkeit bzw. Entflammbarkeit des nach dem Verfahren hergestellten Schall- und/oder Wärmedämmelements weiter herabgesetzt werden. Als Flammschutzmittel wird vorzugsweise ein intumeszierendes Flammschutzmittel, wie beispielsweise Blähgraphit, eingesetzt. Blähgraphit besitzt den Vorteil, dass es im Unterschied zu den meisten herkömmlichen Flammschutzmitteln toxikologisch völlig unbedenklich ist. Alternativ oder ergänzend können ablative hydrathaltige Flammschutzmittel, wie beispielsweise Aluminiumhydroxid, eingesetzt werden.

Bevorzugt werden schäumbare und/oder vorgeschäumte Polymerschaumpartikel aus Polystyrol, Polypropylen, Polyethylen und/oder Polyethylenterephthalat verwendet. Diese Polymere weisen Monomere auf, die unpolar sind und daher sehr wenig Wasser aufnehmen bzw. wasserabweisend sind. Das gilt entsprechend für hieraus hergestellte Polymer-Partikelschäume. Wird zusätzlich ein nicht-hydrophiles Bindemittel zum Beschichten der Polymerschaumpartikel in Schritt a) des Verfahrens eingesetzt, kann die geringe Wasseraufnahmefähigkeit eines solchen Polymer-Partikelschaums erhalten werden oder sogar weiter herabgesetzt werden.

Darüber hinaus können auch schäumbare und/oder vorgeschäumte Polymerschaumpartikel aus einem Biopolymer verwendet werden. Bevorzugt handelt es sich bei dem Biopolymer um Polylactid bzw. Polymilchsäure und/oder um ein Biopolymer auf Basis von Stärke oder Cellulose, beispielsweise Celluloseacetat, Cellulosepropionat oder Cellulosebutyrat. Biopolymere bestehen im Unterschied zu den zuvor genannten Polymeren aus polaren Monomeren. Hieraus hergestellte Polymer-Partikelschäume weisen demzufolge eine vergleichsweise hohe Wasseraufnahmefähigkeit auf. Durch Beschichten der Polymerschaumpartikel mit einem nicht-hydrophilen Bindemittel kann diese jedoch herabgesetzt werden.

Vorzugsweise werden in Schritt d) des Verfahrens beschichtete, getrocknete und abgereicherte Polymerschaumpartikel einem Endschäumprozess unterzogen, die einen Treibmittelgehalt ≤ 4,0 Gew.-%, vorzugsweise ≤ 3,0 Gew.-%, weiterhin vorzugsweise ≤ 2,0 Gew.-% und besonders bevorzugt ≤ 1,8 Gew.-% bezogen auf das Gesamtgewicht der beschichteten, getrockneten und abgereicherten Polymerschaumpartikel aufweisen. Je geringer der Treibmittelgehalt ist, desto weniger Bindemittel ist erforderlich, um die Expansion der Polymerschaumpartikel beim Endschäumen zu beschränken.

Weiterhin vorzugsweise wird das Beschichten der schäumbaren und/oder vorgeschäumten Polymerschaumpartikel in Schritt a) durch Mischen und/oder in einem Mischer durchgeführt. Beim Mischen werden die Polymerschaumpartikel bewegt, so dass eine besonders gleichmäßige Verteilung der wässrigen Polymerdispersion erreicht wird. Gleiches gilt für etwaige in der Polymerdispersion enthaltenen Additive.

Anschließend werden die beschichteten Polymerschaumpartikel in Schritt b) getrocknet, vorzugsweise mittels Heiß- bzw. Warmluft und/oder in einem Fließbetttrockner. Auf diese Weise kann ein unerwünschtes Zusammenkleben der beschichteten Partikel weitgehend verhindert werden. Die Verarbeitung getrockneter Polymerschaumpartikel besitzt zudem den Vorteil, dass hieraus hergestellte Formteile bereits nach einer Trockenzeit von etwa 24 Stunden Querzugsfestigkeiten von > 80 kPa aufweisen. Bei Verwendung noch feuchter beschichteter Polymerschaumpartikel werden derart hohe Festigkeiten erst nach mehreren Tagen bzw. nach einer Woche erreicht.

In Schritt c), der optional ist, werden die beschichteten und getrockneten Polymerschaumpartikel gelagert, vorzugsweise bei einer Temperatur zwischen 10°C und 70°C. Die Abreicherung hinsichtlich des Treibmittelgehalts kann auf diese Weise beschleunigt werden. Die Abreicherung von Pentan besitzt insbesondere den Vorteil, dass Spannungsrisse vermieden werden, die dazu führen können, dass die Formteile beim Ausformen brechen.

Die beschichteten, getrockneten und vorzugsweise nach mehrtägigem Lagern abgereicherten Polymerschaumpartikel werden dann endgeschäumt. Beim Endschäumen in Schritt d) kann ein Formteilautomat, eine Bandpresse oder ein Blockschäumverfahren eingesetzt werden.

Bei dem vorgeschlagenen Verfahren zur Herstellung eines Schall- und/oder Wärmedämmelements werden bevorzugt 50 bis 99 Gew.-%, vorzugsweise 60 bis 98 Gew.-%, weiterhin vorzugsweise 70 bis 95 Gew.-% und besonders bevorzugt 80 bis 90 Gew.-% schäumbare und/oder vorgeschäumte Polymerschaumpartikel sowie 1 bis 50 Gew.-%, vorzugsweise 2 bis 40 Gew.-%, weiterhin vorzugsweise 5 bis 30 Gew.-% und besonders bevorzugt 10 bis 20 Gew.-% organische Bindemittel jeweils bezogen auf das Feststoff-Gesamtgewicht der Ausgangsstoffe, und zwar beschränkt auf die Polymerschaumpartikel und das Bindemittel verwendet werden.

Hieraus ergibt sich ein bevorzugtes Gewichtsverhältnis Polymerschaumpartikel (PSP) zu Bindemittel (BM), für das gilt PSP/BM <20, vorzugsweise PSP/BM <15, weiterhin vorzugsweise PSP/BM <10 und besonders bevorzugt PSP/BM < 8. Weiterhin bevorzugt liegt das Gewichtsverhältnis Polymerschaumpartikel (PSP) zu Bindemittel (BM) bei PSP/BM > 2, vorzugsweise PSP/BM > 3, weiterhin vorzugsweise PSP/BM > 4.

Darüber hinaus können den Ausgangsstoffen zur Herstellung eines Schall- und/oder Wärmedämmelements übliche Additive zugegeben werden, vorzugsweise werden die Additive der wässrigen Polymerdispersion zugegeben, mit welcher die Polymerschaumpartikel in Schritt a) des Verfahrens beschichtet werden. Auf diese Weise wird eine gleichmäßige Verteilung der Additive erreicht. Der Anteil der Additive kann 0 bis 40 Gew.-% bezogen auf das Feststoff-Gesamtgewicht der Ausgangsstoffe, und zwar beschränkt auf die Polymerschaumpartikel und das Bindemittel betragen. Vorzugsweise beträgt er 0 bis 30 Gew.-%, weiterhin vorzugsweise 0 bis 25 Gew.-% jeweils bezogen auf das Feststoff-Gesamtgewicht der Ausgangsstoffe, und zwar beschränkt auf die Polymerschaumpartikel und das Bindemittel.

Ferner wird ein Schall- und/oder Wärmedämmelement vorgeschlagen, das nach dem erfindungsgemäßen Verfahren hergestellt worden ist und zumindest wasserdampfdiffusionsoffen, vorzugsweise wasserdampfdiffusionsoffen und wasserdurchlässig, ist. Das derart hergestellte Schall- und/oder Wärmedämmelement eignet sich sowohl zur Anwendung im Innenbereich, als auch im Außenbereich. Ferner kann der Einsatz in besonders feuchtigkeitsbelasteten Bereichen erfolgen, da die Wasseraufnahmefähigkeit herabgesetzt ist.

Das erfindungsgemäße Verfahren weist den Vorteil auf, dass durch eine gezielte Beeinflussung des Expansionsvermögens der Polymerschaumpartikel, die auf den zumindest teilweise umhüllenden Bindemittelfilm zurückzuführen ist, und durch die Abreicherung an Treibmittel sich die Struktur und damit die Wasser(dampf)durchlässigkeit des Formteils steuern lassen.

Werden beispielsweise ausschließlich beschichtete, abgereicherte Polymerschaumpartikel mit relativ geringem Expansionsvermögen verwendet, gelangt man zu einem Formteil, das stark drainagefähig und diffusionsoffen ist. Aufgrund seines großen "Hohlraumgeflechts" ist das Formteil sowohl für flüssigen Wasser Als auch für Luft und Wasserdampf gut durchlässig.

Werden beschichtete, aber weniger abgereicherte Polymerschaumpartikel mit etwas höherem Expansionsvermögen verwendet, gelangt man zu Formteilen mit verringerter Drainagefähigkeit. Die Diffusionsoffenheit wird dadurch kaum beeinflusst.

Werden beschichtete und abgereicherte Polymerschaumpartikel zusammen mit bis zu 40 Gew.-% herkömmlichen unbeschichteten Polymerschaumpartikeln verwendet, gelangt man zu Formteilen, die nicht mehr drainagefähig sind, aber immer noch diffusionsoffen. Das Formteil ist nicht mehr oder nur noch kaum für flüssiges Wasser durchlässig, jedoch ist das "Hohlraumgeflecht" ausreichend groß, um Luft oder Dampf durchzulassen. Werden mehr als 40 Gew.-% herkömmliche unbeschichtete Polymerschaumpartikel verwendet, gelangt man zu undurchlässigen Formteilen.

Das erfindungsgemäße Verfahren und das erfindungsgemäße Schall- und/oder Wärmedämmelement werden nachfolgend anhand konkreter Beispiele näher erläutert.

Folgende Bindemittel wurden verwendet:
Bindemittel 1: eine wässrige Copolymerdispersion aus Vinylacetat, Ethylen und Methacrylsäureestern, stabilisiert mit Polyvinylalkohol, Festkörpergehalt ca. 50 Gew.-%.
Bindemittel 2: eine wässrige Polymerdispersion aus Acryl- und Methacrylsäureestern, Festkörpergehalt ca. 48 Gew.-%.
Bindemittel 3: eine wässrige Copolymerdispersion aus Vinylacetat und Ethylen, stabilisiert mit Polyvinylalkohol, Festkörpergehalt ca. 50 Gew.-%.

Um die jeweiligen Kontaktwinkel, vorliegend von Wasser und von Diiodmethan, sowie die Oberflächenenergien zu ermitteln, wurden Aufzüge der wässrigen Polymerdispersionen bzw. der mit der gleichen Menge Wasser zuvor redispergierten Dispersionspulver jeweils in einer Nassschichtstärke von 250 µm auf Lenetta-Folie aufgerakelt und drei Tage bei 23°C und 50% relativer Luftfeuchte getrocknet. Anschließend wurden die Kontaktwinkel der Wasser- bzw. Diiodmethan-Tropfen nach 1 min Aquilibrierungszeit auf der jeweiligen Oberfläche gemessen, die Oberflächenenergien sowie die polaren und dispersen Anteile der jeweiligen Oberflächenenergie ermittelt. Die Messung der Kontaktwinkel erfolgte mit einem Krüss Mobile Drop GH11 (Advance Software Version 1.3.1), und zwar an der Dreiphasen-Berührungslinie zwischen Festkörper, Flüssigkeit und Gas. Es wurden jeweils fünf Messungen an unterschiedlichen Stellen der jeweiligen Oberflächen vorgenommen. Hierzu wurden jeweils fünf Tropfen Wasser bzw. Diiodmethan auf die Oberflächen gegeben. Die Messergebnisse wurden anschließend gemittelt.

Die Messergebnisse sind in der nachstehenden Tabelle aufgeführt:

| | KW Wasser [°] | KW Diiodmethan [°] | Gesamt-OFE [mN/M] | Polarer Anteil [mN/m] | Disperser Anteil [mN/m] |
|---|---|---|---|---|---|
| BM 1 | 27,1 | 121,6 | 75,1 | 72,7 | 2,9 |
| BM 2 | 73,4 | 53,3 | 40,4 | 8,0 | 32,4 |
| BM 3 | 43,9 | 47,0 | 59,6 | 23,5 | 36,0 |

Entsprechend der in dieser Anmeldung angegebenen Definition eines nicht-hydrophilen Bindemittels, sind lediglich die Bindemittel 2 und 3 als solche anzusehen. Das Bindemittel 1 fällt nicht hierunter.

### Beispiel 1

Es wurden 700 g vorgeschäumte Polystyrol-Partikel mit einer Partikelgröße von 4 bis 7 mm und einer Schüttdichte von etwa 16 kg/m³ mit 300 g einer wässrigen Polymerdispersion (wässrige Copolymerdispersion aus Vinylacetat-Ethylen, Festkörpergehalt ca. 50 Gew.-%, Bindemittel 3) beschichtet, indem die Polystyrol-Partikel und die Polymerdispersion innig gemischt wurden. Der Mischung wurden vor dem Trocknen der Polymerdispersion 150 g Blähgraphit zugegeben. Die Trocknung der Mischung erfolgte in einem Fließbett unter Heißluftzufuhr. Zur weiteren Abreicherung des Treibmittels wurden die trockenen, beschichteten Polystyrol-Partikel über einen Zeitraum von drei Tagen bei 70°C gelagert.

Von dieser Mischung wurden 9 L in eine Form mit den Abmessungen 30 cm x 30 cm x 10 cm gefüllt und unter Druck und Wärme (100°C), wobei Wasserdampf als Heizmedium diente, der die Form vollflächig durchströmte, zu einer Platte mit den Abmessungen 30 cm x 30 cm x 10 cm verblockt (endgeschäumt). Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 35 W/(mK) und eine Dichte ρ nach DIN EN 1602 von 27,4 kg/m³. Die Wasseraufnahme nach DIN EN 1609 betrug 166 g/m².

Die Zugfestigkeit quer zur Plattenfläche (Querzugfestigkeit) nach DIN EN 607 betrug bereits 24 Stunden nach dem Entformen > 80 kPa.

### Vergleichsbeispiel (nicht erfindungsgemäß):

Entsprechend Beispiel 1 wurde eine Mischung bestehend aus Polystyrol-Partikeln, Polymerdispersion und Blähgraphit hergestellt. Abweichend vom Beispiel 1 wurde die noch feuchte Mischung (ohne Trocknung und Lagerung) in derselben Form zu einem Formteil verblockt.

Die Zugfestigkeit quer zur Plattenfläche (Querzugfestigkeit) nach DIN EN 1607 betrug erst nach einer Woche Trocknung bei Raumtemperatur > 80 kPa.

### Beispiel 2

Es wurden 700 g vorgeschäumte Polystyrol-Partikel mit einer Partikelgröße von 4 bis 7 mm und einer Schüttdichte von etwa 16 kg/m³ mit 300 g einer wässrigen Polymerdispersion (wässrige Polymerdispersion aus Acryl- und Methacrylsäureestern, Festkörpergehalt ca. 48 Gew.-%, Bindemittel 2), der noch 150 g Blähgraphit zugegeben worden waren, beschichtet, indem die Polystyrol-Partikel und die Polymerdispersion innig gemischt wurden. Die Trocknung der Mischung erfolgte in einem Fließbett unter Heißluftzufuhr. Zur weiteren Abreicherung des Treibmittels wurden die trockenen, beschichteten Polymer-Partikel über einen Zeitraum von drei Tagen bei 70°C gelagert. Von dieser Mischung wurden 9 L in eine Form mit den Abmessungen 30 cm x 30 cm x 10 cm gefüllt und unter Druck und Wärme (100°C), wobei Wasserdampf als Heizmedium diente, der die Form vollflächig durchströmte, zu einer Platte mit den Abmessungen 30 cm x 30 cm x 10 cm verblockt (endgeschäumt). Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 35 W/(mK) und eine Dichte ρ nach DIN EN 1602 von 27,0 kg/m³. Die Wasseraufnahme nach DIN EN 1609 betrug 136 g/m².

Die Zugfestigkeit quer zur Plattenfläche (Querzugfestigkeit) nach DIN EN 1607 betrug bereits 24 Stunden nach dem Entformen > 80 kPa.

### Beispiel 3

Es wurden 700 g vorgeschäumte Polystyrol-Partikel mit einer Partikelgröße von 4 bis 7 mm und einer Schüttdichte von etwa 15 kg/m³ mit 200 g einer Copolymerdispersion aus Vinylacetat, Ethylen und Methacrylsäureestern (Festkörpergehalt ca. 50 Gew.-%, Bindemittel 1), dem noch 150 g Blähgraphit zugegeben worden waren, beschichtet, indem die Polystyrol-Partikel und die Polymerdispersion innig gemischt wurden. Die Trocknung der Mischung erfolgte in einem Fließbett unter Heißluftzufuhr. Zur weiteren Abreicherung des Treibmittels wurden die trockenen, beschichteten Polystyrol-Partikel über einen Zeitraum von drei Tagen bei 70°C gelagert. Von dieser Mischung wurden 9L in eine Form mit einer Grundfläche der Abmessungen 30 cm x 30 cm gegeben und unter Druck und Wärme (100°C), wobei Wasserdampf als Heizmedium diente, der die Form vollflächig durchströmte, zu einer Platte mit den Abmessungen 30 cm x 30 cm x 7 cm verpresst. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 < 33 W/(mK) und eine Dichte ρ nach DIN EN 1602 von 37,9 kg/m³. Die Wasseraufnahme nach DIN EN 1609 betrug 462 g/m².

Die Zugfestigkeit quer zur Plattenfläche (Querzugfestigkeit) nach DIN EN 1607 betrug bereits 24 Stunden nach dem Entformen > 80 kPa.

Die Beispiele zeigen, dass die Verwendung eines nicht-hydrophilen Bindemittels (vorliegend Bindemittel 2 und 3) entsprechend der Beispiele 1 und 2 zu einem Formkörper führt, bei dem die Wasseraufnahme deutlich geringer ist.

Die Formkörper aller Beispiele wurden ferner hinsichtlich ihrer Wasserdurchlässigkeit getestet. Auf der Oberfläche der Formteile aufgebrachtes Wasser durchdrang diese schnell und vollständig.

## Patentansprüche

1. Verfahren zur Herstellung eines Schall- und/oder Wärmedämmelements, bei dem schäumbare und/oder vorgeschäumte Polymerschaumpartikel verwendet werden, die vor einem Endschäumprozess mit einem organischen Bindemittel beschichtet werden,
**gekennzeichnet durch** folgende Schritte:
a) Beschichten zumindest eines Teils der Polymerschaumpartikel mit einer wässrigen Polymerdispersion,
b) Trocknen der beschichteten Polymerschaumpartikel,
c) optional: Lagern der beschichteten und getrockneten Polymerschaumpartikel über einen Zeitraum von mindestens 12 Stunden zur Treibmittel-Abreicherung bzw. zur Beschleunigung der Treibmittel-Abreicherung
d) Endschäumen der beschichteten, getrockneten und vorzugsweise abgereicherten Polymerschaumpartikel unter Zugabe von Feuchtigkeit und/oder Wärme, wobei das zum Beschichten der Polymerschaumpartikel eingesetzte Bindemittel reaktiviert wird, so dass ein die Polymerschaumpartikel zumindest teilweise umhüllender Bindemittelfilm ausgebildet wird, der die Expansion der Polymerschaumpartikel während des Endschäumprozesses verringert.

2. Verfahren nach Anspruch 1,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das thermoplastisch ist und/oder eine Glasübergangstemperatur T_{g} zwischen -50°C und 30°C, vorzugsweise zwischen -40°C und 20°C, weiterhin vorzugsweise zwischen -35°C und 10°C aufweist.

3. Verfahren nach Anspruch 1 oder 2,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das wasserlösliche oder anlösbare Stabilisatoren, insbesondere Polyvinylalkohole und/oder Metall-Fettsäuresalze, wie beispielsweise Natrium-Stearat, enthält.

4. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das nicht-hydrophil ist und einen statischen Anfangskontaktwinkel von Wasser nach 1 min Äquilibrieren ≥ 35°, eine Oberflächenenergie nach DIN 55660-2 ≤ 70 mN/m, einen polaren Anteil der Oberflächenenergie nach DIN 55660-2 ≤ 35 mN/m sowie einen dispersen Anteil der Oberflächenenergie nach DIN 55660-2 ≥ 10 mN/m aufweist.

5. Verfahren nach Anspruch 4,
**dadurch gekennzeichnet, dass** das Polymerbindemittel einen statischen Anfangskontaktwinkel von Wasser nach 1 min Äquilibrieren ≥ 40°, vorzugsweise ≥ 50°, aufweist.

6. Verfahren nach Anspruch 4 oder 5,
**dadurch gekennzeichnet, dass** das Polymerbindemittel eine Oberflächenenergie nach DIN 55660-2 ≤ 65°mN/m, vorzugsweise ≤ 60 mN/m, aufweist.

7. Verfahren nach einem der Ansprüche 4 bis 6,
**dadurch gekennzeichnet, dass** das Polymerbindemittel einen polaren Anteil der Oberflächenenergie nach DIN 5660-2 ≤ 30 mN/m, vorzugsweise ≤ 25 mN/m, aufweist.

8. Verfahren nach einem der Ansprüche 4 bis 7,
**dadurch gekennzeichnet, dass** das Polymerbindemittel einen dispersen Anteil der Oberflächenenergie nach DIN 55660-2 ≥ 20 mN/m, vorzugsweise ≥ 30 mN/m, aufweist.

9. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion auf Basis von Acrylat, (Meth)acrylat, Styrolacrylat, Vinylacetat, Vinylacetat-Ethylen, Vinylestern, Vinylchlorid, Polyurethan, Polysiloxane und/oder Silikonharze verwendet wird.

10. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion verwendet wird, die mindestens ein Additiv enthält, wobei das Additiv vorzugsweise ein Flammschutzmittel, weiterhin vorzugsweise ein intumeszierendes Flammschutzmittel, wie beispielsweise Blähgraphit, und/oder ein ablatives hydrathaltiges Flammschutzmittel, wie beispielsweise Aluminiumhydroxid, ist.

11. Verfahren nach einem der vorhergehenden Ansprüche,
**dadurch gekennzeichnet, dass** schäumbare und/oder vorgeschäumte Polymerschaumpartikel aus Polystyrol, Polypropylen, Polyethylen und/oder Polyethylenterephthalat verwendet werden.

12. Verfahren nach einem der vorhergehenden Ansprüche,
**dadurch gekennzeichnet, dass** schäumbare und/oder vorgeschäumte Polymerschaumpartikel aus einem Biopolymer, insbesondere aus Polylactid und/oder aus einem Biopolymer auf Basis von Stärke oder Cellulose, beispielsweise Celluloseacetat, Cellulosepropionat und/oder Cellulosebutyrat, verwendet werden.

13. Verfahren nach einem der vorhergehenden Ansprüche,
**dadurch gekennzeichnet, dass** in Schritt d) beschichtete, getrocknete und abgereicherte Polymerschaumpartikel einem Endschäumprozess unterzogen werden, die einen Treibmittelgehalt ≤ 4,0 Gew.-%, vorzugsweise ≤ 3,0 Gew.-%, weiterhin vorzugsweise ≤ 2,0 Gew.-% und besonders bevorzugt ≤ 1,8 Gew.-% bezogen auf das Gesamtgewicht der beschichteten, getrockneten und abgereicherten Polymerschaumpartikel aufweisen.

14. Verfahren nach einem der vorhergehenden Ansprüche,
**dadurch gekennzeichnet, dass** das Beschichten in Schritt a) durch Mischen und/oder in einem Mischer durchgeführt wird.

15. Verfahren nach einem der vorhergehenden Ansprüche,
**dadurch gekennzeichnet, dass** die beschichteten Polymerschaumpartikel in Schritt b) mittels Heißluft bzw. Warmluft und/oder in einem Fließbetttrockner getrocknet werden.

16. Verfahren nach einem der vorhergehenden Ansprüche,
**dadurch gekennzeichnet, dass** die beschichteten und getrockneten Polymerschaumpartikel in Schritt c) bei einer Temperatur zwischen 10°C und 70°C gelagert werden.

17. Verfahren nach einem der vorhergehenden Ansprüche,
**dadurch gekennzeichnet, dass** beim Endschäumen in Schritt d) ein Formteilautomat, eine Bandpresse oder ein Blockschäumverfahren eingesetzt wird.

18. Verfahren nach einem der vorhergehenden Ansprüche,
**dadurch gekennzeichnet, dass** 50 bis 99 Gew.-%, vorzugsweise 60 bis 98 Gew.-%, weiterhin vorzugsweise 70 bis 95 Gew.-% und besonders bevorzugt 80 bis 90 Gew,.% schäumbare und/oder vorgeschäumte Polymerschaumpartikel sowie 1 bis 50 Gew.-%, vorzugsweise 2 bis 40 Gew.-%, weiterhin vorzugsweise 5 bis 30 Gew.-% und besonders bevorzugt 10 bis 20 Gew.-% organische Bindemittel jeweils bezogen auf das Feststoff-Gesamtgewicht der Ausgangsstoffe, und zwar beschränkt auf die Polymerschaumpartikel und das Bindemittel verwendet werden.

19. Schall- und/oder Wärmedämmelement das nach einem Verfahren nach einem der vorhergehenden Ansprüche hergestellt worden ist und zumindest wasserdampfdiffusionsoffen, vorzugsweise wasserdampfdiffusionsoffen und wasserdurchlässig, ist.

## Geänderte Patentansprüche

### Geänderte Patentansprüche gemäss Regel 137(2) EPÜ.

1. Verfahren zur Herstellung eines Schall- und/oder Wärmedämmelements, bei dem schäumbare und/oder vorgeschäumte Polymerschaumpartikel verwendet werden, die vor einem Endschäumprozess mit einem organischen Bindemittel beschichtet werden,
**umfassend** folgende Schritte:
a) Beschichten zumindest eines Teils der Polymerschaumpartikel mit einer wässrigen Polymerdispersion,
b) Trocknen der beschichteten Polymerschaumpartikel,
c) Lagern der beschichteten und getrockneten Polymerschaumpartikel über einen Zeitraum von mindestens 12 Stunden zur Treibmittel-Abreicherung bzw. zur Beschleunigung der Treibmittel-Abreicherung,
d) Endschäumen der beschichteten, getrockneten und abgereicherten Polymerschaumpartikel unter Zugabe von Wärme, wobei beschichtete, getrocknete und abgereicherte Polymerschaumpartikel einem Endschäumprozess unterzogen werden, die einen Treibmittelgehalt ≤ 4,0 Gew.-% bezogen auf das Gesamtgewicht der beschichteten, getrockneten und abgereicherten Polymerschaumpartikel aufweisen, und wobei beim Endschäumen das zum Beschichten der Polymerschaumpartikel eingesetzte Bindemittel reaktiviert wird, so dass ein die Polymerschaumpartikel zumindest teilweise umhüllender Bindemittelfilm ausgebildet wird, der die Expansion der Polymerschaumpartikel während des Endschäumprozesses verringert.

2. Verfahren nach Anspruch 1,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das thermoplastisch ist.

3. Verfahren nach Anspruch 1 oder 2,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das als wasserlösliche oder anlösbare Stabilisatoren Polyvinylalkohole und/oder Metall-Fettsäuresalze, wie beispielsweise Natrium-Stearat, enthält.

4. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion auf Basis eines Polymerbindemittels verwendet wird, das nicht-hydrophil ist und einen statischen Anfangskontaktwinkel von Wasser nach 1 min Äquilibrieren ≥ 35°, eine Oberflächenenergie nach DIN 55660-2 ≤ 70 mN/m, einen polaren Anteil der Oberflächenenergie nach DIN 55660-2 ≤ 35 mN/m sowie einen dispersen Anteil der Oberflächenenergie nach DIN 55660-2 ≥ 10 mN/m aufweist.

5. Verfahren nach Anspruch 4,
**dadurch gekennzeichnet, dass** das Polymerbindemittel einen statischen Anfangskontaktwinkel von Wasser nach 1 min Äquilibrieren ≥ 40°, vorzugsweise ≥ 50°, aufweist.

6. Verfahren nach Anspruch 4 oder 5,
**dadurch gekennzeichnet, dass** das Polymerbindemittel eine Oberflächenenergie nach DIN 55660-2 ≤ 65°mN/m, vorzugsweise ≤ 60 mN/m, aufweist.

7. Verfahren nach einem der Ansprüche 4 bis 6,
**dadurch gekennzeichnet, dass** das Polymerbindemittel einen polaren Anteil der Oberflächenenergie nach DIN 5660-2 ≤ 30 mN/m, vorzugsweise ≤ 25 mN/m, aufweist.

8. Verfahren nach einem der Ansprüche 4 bis 7,
**dadurch gekennzeichnet, dass** das Polymerbindemittel einen dispersen Anteil der Oberflächenenergie nach DIN 55660-2 ≥ 20 mN/m, vorzugsweise ≥ 30 mN/m, aufweist.

9. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion auf Basis von Acrylat, (Meth)acrylat, Styrolacrylat, Vinylacetat, Vinylacetat-Ethylen, Vinylestern, Vinylchlorid, Polyurethan, Polysiloxane und/oder Silikonharze verwendet wird.

10. Verfahren nach einem der vorhergehenden Ansprüche,
**dadurch gekennzeichnet, dass** zum Beschichten der schäumbaren und/oder vorgeschäumten Polymerschaumpartikel eine wässrige Polymerdispersion verwendet wird, die mindestens ein Additiv enthält, wobei das Additiv vorzugsweise ein Flammschutzmittel, weiterhin vorzugsweise ein intumeszierendes Flammschutzmittel, wie beispielsweise Blähgraphit, und/oder ein ablatives hydrathaltiges Flammschutzmittel, wie beispielsweise Aluminiumhydroxid, ist.

11. Verfahren nach einem der vorhergehenden Ansprüche,
**dadurch gekennzeichnet, dass** schäumbare und/oder vorgeschäumte Polymerschaumpartikel aus Polystyrol, Polypropylen, Polyethylen und/oder Polyethylenterephthalat verwendet werden.

12. Verfahren nach einem der vorhergehenden Ansprüche,
**dadurch gekennzeichnet, dass** schäumbare und/oder vorgeschäumte Polymerschaumpartikel aus einem Biopolymer, insbesondere aus Polylactid und/oder aus einem Biopolymer auf Basis von Stärke oder Cellulose, beispielsweise Celluloseacetat, Cellulosepropionat und/oder Cellulosebutyrat, verwendet werden.

13. Verfahren nach einem der vorhergehenden Ansprüche,
**dadurch gekennzeichnet, dass** in Schritt d) beschichtete, getrocknete und abgereicherte Polymerschaumpartikel einem Endschäumprozess unterzogen werden, die einen Treibmittelgehalt ≤ 3,0 Gew.-%, vorzugsweise ≤ 2,0 Gew.-% und besonders bevorzugt ≤ 1,8 Gew.-% bezogen auf das Gesamtgewicht der beschichteten, getrockneten und abgereicherten Polymerschaumpartikel aufweisen.

14. Verfahren nach einem der vorhergehenden Ansprüche,
**dadurch gekennzeichnet, dass** das Beschichten in Schritt a) durch Mischen und/oder in einem Mischer durchgeführt wird.

15. Verfahren nach einem der vorhergehenden Ansprüche,
**dadurch gekennzeichnet, dass** die beschichteten Polymerschaumpartikel in Schritt b) mittels Heißluft bzw. Warmluft und/oder in einem Fließbetttrockner getrocknet werden.

16. Verfahren nach einem der vorhergehenden Ansprüche,
**dadurch gekennzeichnet, dass** die beschichteten und getrockneten Polymerschaumpartikel in Schritt c) bei einer Temperatur zwischen 10°C und 70°C gelagert werden.

17. Verfahren nach einem der vorhergehenden Ansprüche,
**dadurch gekennzeichnet, dass** beim Endschäumen in Schritt d) ein Formteilautomat, eine Bandpresse oder ein Blockschäumverfahren eingesetzt wird.

18. Verfahren nach einem der vorhergehenden Ansprüche,
**dadurch gekennzeichnet, dass** 50 bis 99 Gew.-%, vorzugsweise 60 bis 98 Gew.-%, weiterhin vorzugsweise 70 bis 95 Gew.-% und besonders bevorzugt 80 bis 90 Gew,.% schäumbare und/oder vorgeschäumte Polymerschaumpartikel sowie 1 bis 50 Gew.-%, vorzugsweise 2 bis 40 Gew.-%, weiterhin vorzugsweise 5 bis 30 Gew.-% und besonders bevorzugt 10 bis 20 Gew.-% organische Bindemittel jeweils bezogen auf das Feststoff-Gesamtgewicht der Ausgangsstoffe, und zwar beschränkt auf die Polymerschaumpartikel und das Bindemittel verwendet werden.
